# EUROPEAN PATENT APPLICATION

(11) **EP 4 635 446 A1**
(43) Date of publication of application: **22.10.2025**
(21) Application number: 24170728.0
(22) Date of filing: 17.04.2024
(51) Int. Cl.: A61C 7/00, A61C 7/08, B33Y 80/00, A61C 7/36, B33Y 50/00

(54) **DENTAL ALIGNERS AND RELATED MANUFACTURING METHOD**

(71) Applicant: Sweden & Martina SpA, 35020 Due Carrare (PD) (IT)
(72) Inventor: SICILIANI, Giuseppe, 35020 DUE CARRARE (PD) (IT); LOMBARDO, Luca, 35020 DUE CARRARE (PD) (IT)
(74) Representative: Rocchetto, Elena

(57) **Abstract**

The invention is a new set of dental aligners (A), wherein each aligner (A) is manufactured joined to one or more aligners (A) intended for the same patient and suitable for progressive use by the same patient. The present patent also concerns the method for making the set of aligners (A) together with the connecting appendages (A) between the aligners (A) making up each set.

## Description

The present patent concerns dental aligners.

More specifically, the present patent concerns a set of progressive aligners and their manufacturing process.

Aligners are orthodontic devices designed to achieve a shift and/or rotation of one or more teeth of a patient.

A type of orthodontic appliance widely used to date consists of several brackets provided with grooves and hooks, each attached to the surface of a tooth, which are all connected by an arch wire housed in the grooves of the brackets themselves. Said arch wire is curved according to a suitable shape and held on said brackets by elastic rings, small sections of thinner wire or special elements.

Aligners consisting of a sufficiently rigid plastic element, generically having a V- or U-shaped cross-section and extending along the curve of the patient's dental arch, are also known and used.

Said dental aligners, which cover the inner side, the outer side and the upper part of each tooth, are pre-formed in the laboratory according to the morphology of the current dental arch and of the desired dental arch.

Each aligner is not exactly formed on the current dental arch, but is slightly different, so that the tooth or the teeth concerned are forced to change their position and/or inclination. Consequently, aligners are gradually being produced by the laboratory and used by the patient which are capable of progressively modifying the position and/or inclination of the affected teeth by successive movements.

The dental aligners of the latter type, hereinafter simply referred to as aligners, are the preferred ones, for various reasons.

They do not require the application of brackets.

They do not require any operation by the orthodontist, either during application or in the subsequent stages.

They can be produced in a transparent plastic material, with considerable aesthetic, psychological and practical advantages for the patient.

Currently, the production of aligners involves the initial three-dimensional scanning of the patient's dental arch, the computer processing of the desired position and angle of the teeth in the arch and the programming of the individual aligners to be progressively used by the patient.

According to the known techniques for producing aligners, they are thermoformed from a transparent polymer disc on a model of the dental arch previously obtained through 3D printing or directly printed in 3D by sintering successive layers of plastic powder.

According to the latter technique, each individual aligner is produced by means of a selective laser sintering process in which a laser beam is used to heat and join several layers of material one after the other. The laser traces the pattern of each cross-section of the object on a powder layer. Once a layer has been completed, the sintering platform is lowered, another powder layer is laid down and the next layer of the object is created on top of the previous one. The sequence of sintering one layer, lowering the platform, depositing the next powder layer and sintering the next layer continues until all the layers have been created and the aligner has been completed.

The manufacture of each aligner is time-consuming, not only due to the need to sinter the various powder layers, but also due to the need to set up the equipment, extract the object produced and clean it by removing any non-sintered powder.

In fact, independently of whether a small or a large object must be produced, in any case the entire tank must be filled with powder layer by layer and, at the end of the production process, the non-sintered powder left must be removed and conditioned to be possibly reused in subsequent production cycles.

Various pieces can thus be formed inside a tank.

It should also be considered that an orthodontic treatment with aligners requires the production of a set of aligners, which patients must wear sequentially at successive stages.

A set of aligners is produced in a single step and is normally produced with a single setup in a production tank, potentially together with other sets of aligners, to fill the capacity of the tank itself. At the end of the sintering process and during the extraction of the devices from the tank, it is necessary to be able to identify the aligners belonging to the individual sets and to avoid mixing up aligners from different sets intended for different patients.

The subject of the present patent includes a set of progressive aligners and their manufacturing process.

It is an object of the invention to reduce the aligner production time.

It is another object of the invention to reduce errors in the identification of the different sets of aligners produced in the same sintering cycle and inside the same tank, so as to avoid mixing up aligners of different sets and delivering the wrong aligners to the orthodontist.

It is another object of the invention to make it possible to identify the patient for whom each aligner is intended.

It is another object of the invention to allow the correct order of use to be assigned for each aligner.

It is another object of the invention to make it possible to produce several, and preferably all, aligners in a single sintering cycle.

The new set of dental aligners comprises one or more patient-specific and sequentially progressive aligners.

Each aligner is physically connected to the previous and the next aligner in the sequence of use.

Each aligner has an identifier, number, nameplate, so that it is possible to identify at least its progressive position in the sequence of use and at least one reference to the patient for whom it is intended.

According to the invention, said identifiers, numbers, nameplates can also include references to the orthodontist or the dental practice providing the treatment and a reference to the specific patient.

In a first example of embodiment, said set of aligners is made up of several superimposed or stacked aligners, all having the side to be applied to the patient's teeth facing the same direction, spaced apart from each other and connected by an appendage or connecting portion present at the end of the aligner arch.

In a second example of embodiment, in said set of aligners the aligners are aligned and coplanar, that is, with the sides to be applied to the patient's teeth lying in the same plane, each aligner with the curved cusp positioned between the ends of the arch of the adjacent aligner, spaced apart from each other and connected by an appendage or connecting portion present at the end of the aligner arch.

According to the invention, on the side of each aligner, at the level of said connecting appendages, there is a flat portion with information regarding the sequence of use of the aligners, the patient and the dental practice or the orthodontist providing the treatment to the patient.

According to the preferred solution, the information is shown on the appendages in the form of bas-reliefs, thinner portions or through openings reproducing the letters and numbers of the information itself. The entire set of aligners is preferably manufactured in a single cycle, in which all the aligners of the progression, the connecting appendages between the various aligners and the portions bearing said information are sintered.

In practice, the entire set of aligners is manufactured, with the connecting appendages and the flat portions bearing the details of the entire set of aligners.

Said set is also designed according to its position inside the sintering tank in order to optimise the maximum amount of aligners that can be produced in a single laser sintering cycle.

The production laboratory manufactures the entire set of aligners as configured by the dental practice or the orthodontist. At the end of the sintering process, the laboratory substantially needs less time to extract all the aligners and clean them from the non-sintered powder, as the aligners of each set are joined together and do not risk mixing up during the extraction step.

The aligners are separated from each other and packaged only once the set has been taken out of the sintering tank and the excess powder has been removed, and preferably also after the washing step, which typically takes place in an ultrasonic tank. Therefore, the post-sintering washing step is also facilitated.

According to the invention, said aligners are preferably of the type described and claimed in patent 102022000009431, which is cited by reference herein in its entirety.

In a preferred solution, said aligners are manufactured according to the method described and claimed in patent 102022000009431, which is cited by reference herein in its entirety.

The preferred method, described in the above-mentioned patent, is a method for manufacturing at least one aligner suitable for the orthodontic alignment of a patient's teeth from an initial malocclusion to a final position and suitable for application to a patient's lower and/or upper dental arch, said method comprising the following steps:
A. collecting the virtual models of at least one of said dental arches of said patient;
B. isolating said teeth from a gingiva in said virtual models, so as to acquire said initial position;
C. virtually shifting said isolated teeth from said initial position to said final position;
D. digitally designing said at least one aligner;
E. physically making said at least one aligner.

Said step D includes the following optional step D1 of calculating a thickness variation progression for said aligner according to the type of stress which said aligner must withstand and/or transfer in certain areas.

Said step D may also comprise a further step D0 preceding said step D1 and consisting in the creation of a report relating to the movement of the teeth between said initial position and said final position, wherein said report includes at least the data relating to the rotation, mesiodistal inclination, vestibulo-lingual inclination, horizontal or vertical movement which each of said teeth must perform to move from said initial position to said final position, identifying a critical tooth, and wherein said optional step D1 is performed based on said step D0.

Again according to the method, after said step D0 of creating a report, there is step D01 in which a variable number of intermediate positions between said initial position and said final position is virtually created based on the shifting movement to which said critical tooth must be subjected in order to reach said final position, and in which a maximum correction speed is set for each of said intermediate positions.

Furthermore, according to the method said step D also includes step D2 of designing at least one thicker part in at least one of said areas of said at least one aligner, wherein said thicker part is sized based on at least one of the following parameters:
- shape and size of the roots of said teeth;
- size of the root portion covered by a bone;
- type of shift to which at least one of said teeth must be subjected to reach said final position.

Furthermore, when said design step included in step D is carried out using specific software, the method also includes the following steps:
- importing the models of the initial position, the intermediate positions and the final position in said software in STL or mesh format;
- marking a plurality of check points on said models to indicate the area over which said aligner must extend;
- generating planes based on the position of said check points, for each of said intermediate positions;
- extracting from said mesh a plurality of sections relevant to the remeshing of at least one of said dental arches;
- generating a 3D printable or millable solid.

According to the invention, the method can include, if envisaged by the planned orthodontic treatment, a further step of insertion of slide planes which are complementary to each other and are intended to exert forces between said two dental arches so that, while the mouth is closed, they force said patient to move the jaw forward or backward.

Step E of physically making at least one aligner is preferably carried out by means of 3D printing, that is, with laser sintering printers using at least one of the following materials: resin, polyamide, metal or any other material suited to be printed.

According to the method, in the case where the orthodontic treatment involves the sequential use of two or more of said aligners to form a set, said set is printed so that said aligners are joined together as described above and as claimed below.

According to the method, several different sets of aligners joined together as described can be printed, wherein, for example, the different sets are arranged on parallel planes. The application of the method described above makes it possible to obtain aligners that, due to their biomechanical characteristics, are effective even if worn only for a limited number of hours during the day or only at night.

The aligner obtained is also able to exert different forces in proportion to the root surface of each individual tooth undergoing the treatment.

The drawings attached hereto show a practical embodiment of the invention by way of non-limiting example.

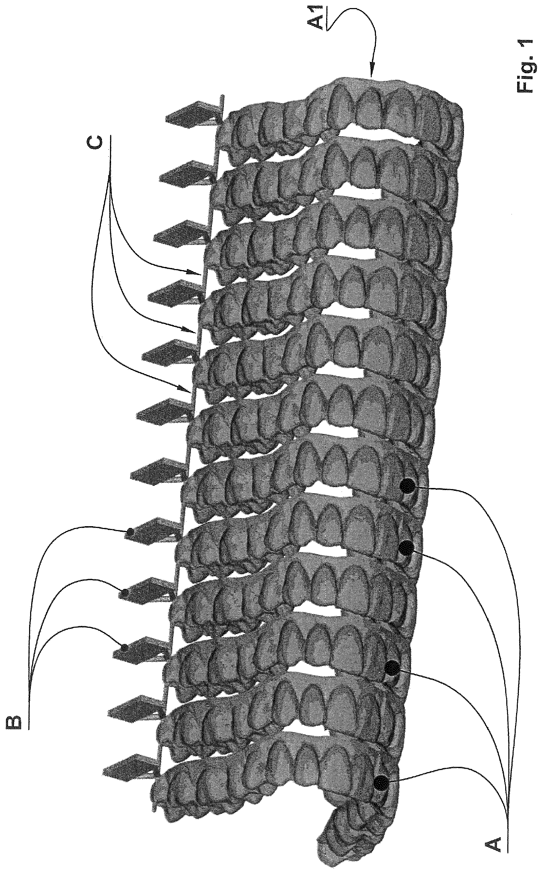

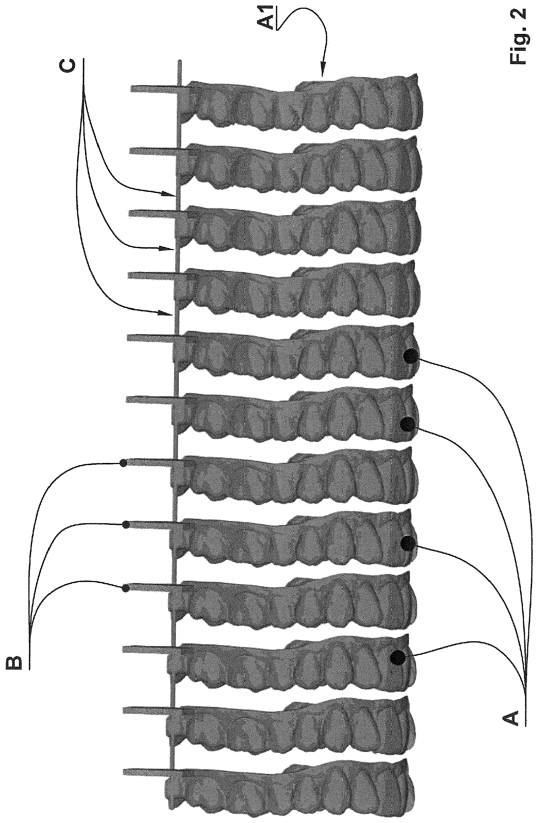

Figures 1 and 2 show the invention covered by the present patent, comprising a set of dental aligners (A) arranged close to one another and connected by means of connecting appendages (C).

In this example, the aligners (A) are arranged as stacked, all having the side (A1) to be applied to the patient's teeth facing the same direction, spaced apart from each other and connected by connecting appendages (C) present at the end of the arch of the aligners (A).

Said connecting appendages (C) preferably have a substantially rounded shape and variable size, so as to make it easier to detach the aligners (A) from each other and so that no sharp surfaces are created on the aligners as a result of detachment.

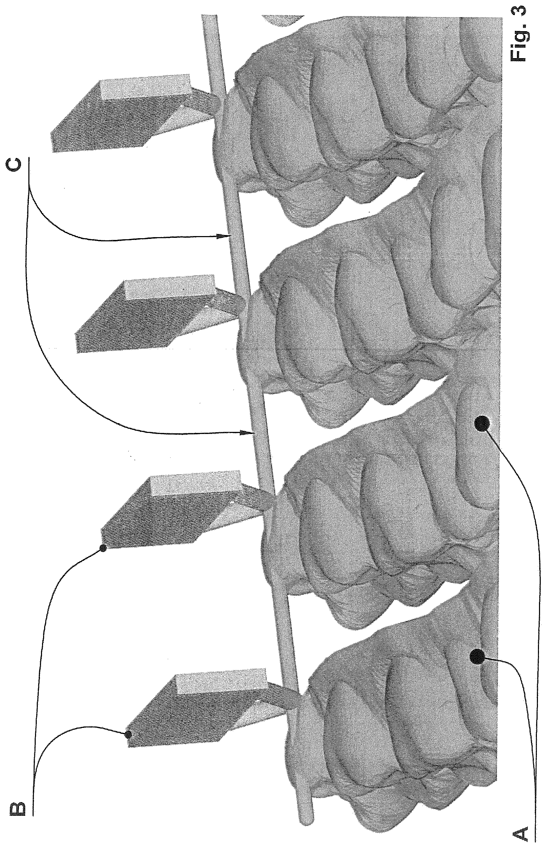

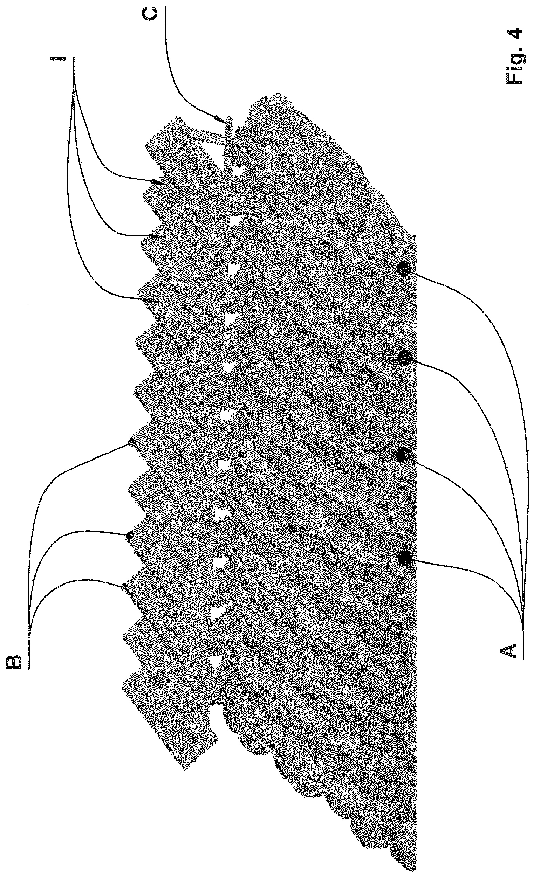

In the example shown in Figures 3 and 4, on the side of each aligner (A), at the level of said connecting appendages (C), there is a flat portion (B) with information (I) regarding the sequence of use of the aligners, the patient and the dental practice or the orthodontist providing the treatment to the patient.

In particular, as can be seen in Figure 4, said information (I) is obtained by differentiating the thickness of each of said flat portions (B) where there are the letters and numbers comprising the information (I).

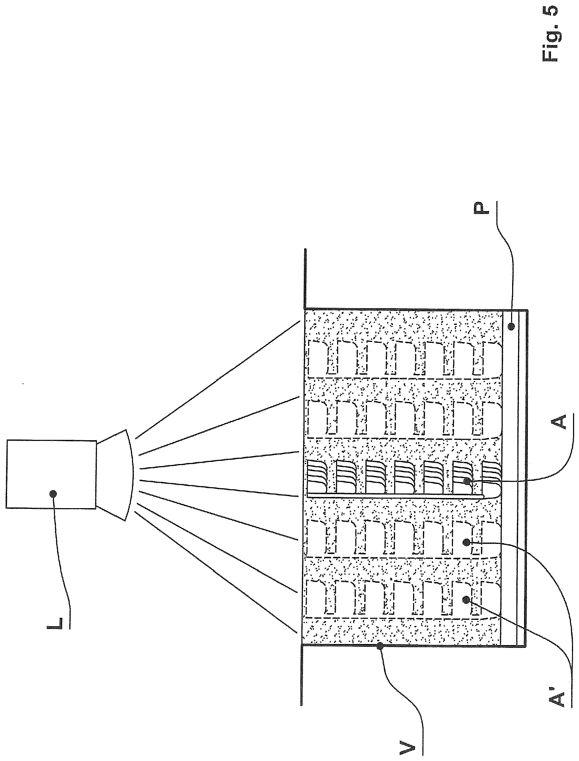

Figure 5 shows the production process of the new aligners (A). Layers of plastic powder are gradually spread in the sintering tank (V), wherein said powder is solidified by the laser emitter (L) layer by layer. Once a powder layer has solidified, the platform (P) is lowered and the next powder layer is deposited thereon.

In each sintering cycle all the aligners (A) of a client/patient are manufactured, joined together by the connecting appendages (C) and with the flat portion (B) and the related information (I).

According to the invention, in a single cycle it is possible to manufacture the aligners (A) of a patient and also the aligners (A') of other patients, as indicated by the broken line in Figure 5.

In order to use each individual aligner (A), it is sufficient to locate it and detach it from the set of aligners (A), possibly refining its connection surface provided with the connecting appendages (C) that joined it to the set of aligners (A).

Said detachment operation is therefore performed only after the aligner sets have been removed from the sintering tank and washed.

The new set of aligners (A) made up as described above has considerable advantages.

Each aligner (A) in the set bears information identifying both the patient for whom it is intended and the sequence of use. Consequently, the production laboratory knows the correct sequence for each individual case at all times and thus can proceed to the subsequent washing and packaging steps with no risk of mixing up aligners produced for different patients. Consequently, the overall production of a set takes less time as it is not necessary to spend time to identify each individual aligner and assign it to the corresponding case.

The risk of delivering to a patient an aligner (A) which is not intended for them is also eliminated, or at least highly reduced.

In a single sintering cycle it is possible to manufacture several sets of aligners (A) for several patients whose treatment is provided even by different dental practices or orthodontists.

Therefore, with reference to the above description and the attached drawings, the following claims are made.

## Claims

1. Set of dental aligners (A), **characterized in that** each aligner (A) is manufactured joined to one or more aligners (A) intended for the same patient and suitable for progressive use by the same patient.

2. Set of dental aligners (A) according to claim 1, **characterized in that** said aligners (A) are joined by connecting appendages (C) suited to connect a part of each aligner (A) to a part of the adjacent aligner (A).

3. Set of dental aligners (A) according to claim 1 or 2, **characterized in that** said aligners (A) are arranged so as to be generically superimposed or stacked and spaced apart from each other.

4. Set of dental aligners (A) according to claim 1 or 2, **characterized in that** said aligners (A) are arranged so as to be coplanar, that is, with their application sides lying in the same plane.

5. Set of dental aligners (A) according to claim 4, **characterized in that** said aligners (A) are arranged in two or more superimposed planes.

6. Set of dental aligners (A) according to the preceding claims, **characterized in that** each aligner (A) has a portion with information (I) regarding the sequence of use of the aligners (A), the patient and the dental practice or the orthodontist providing the treatment to the patient.

7. Set of dental aligners (A) according to the preceding claim, **characterized in that** said portion is either a part of the aligner (A) or is a flat portion (B) of each aligner (A), arranged on said connecting appendages (C) that connect said aligner (A) to the adjacent aligners (A).

8. Set of dental aligners (A) according to claims 6, 7, **characterized in that** said information (I) is obtained on said flat portion (B) by differentiating the thickness where there are the letters and numbers comprising the information (I) and/or by means of openings where there are the letters and numbers comprising the information (I).

9. Set of dental aligners (A) according to claim 2, **characterized in that** said connecting appendages (C) have a substantially rounded shape and variable size.

10. Set of dental aligners (A) according to the preceding claims, **characterized in that** said aligners (A) are made of resin, polyamide, such as nylon, metal, or any other material suited to be milled and/or moulded.

11. Set of dental aligners (A) according to the preceding claims, **characterized in that** said aligners (A) are obtained by means of 3D printing and more preferably by sintering plastic powder in a single sintering cycle.

12. Method for manufacturing at least one dental aligner (A) of the set according to one or more of the preceding claims, suitable for the orthodontic alignment of a patient's teeth from an initial malocclusion to a final position and suitable for application to a patient's lower and/or upper dental arch, **characterized in that** it comprises the following steps:
A. collecting the virtual models of at least one of said dental arches of said patient;
B. isolating said teeth from a gingiva in said virtual models, so as to acquire said initial position;
C. virtually shifting said isolated teeth from said initial position to said final position;
D. digitally designing said at least one aligner;
E. physically making said at least one aligner.

13. Method according to claim 12, **characterized in that** said step D includes the optional step D1 of calculating a variation progression of a thickness of said aligner according to the type of stress which said aligner must withstand and/or transfer in certain areas.

14. Method according to claim 13, **characterized in that** said step D comprises a further step D0 preceding said step D1 and consisting in the creation of a report relating to the movement of the teeth between said initial position and said final position, wherein said report includes at least the data relating to the rotation, mesiodistal angulation, vestibular-lingual inclination, horizontal or vertical movement which each of said teeth must perform to move from said initial position to said final position, identifying a critical tooth, and wherein said optional step D1 is performed based on said step D0.

15. Method according to claim 14, **characterized in that** after said step D0 of creating a report, there is step D01 in which a variable number of intermediate positions between said initial position and said final position is virtually created based on the shifting movement to which said critical tooth must be subjected in order to reach said final position, and in which a maximum correction speed is set for each of said intermediate positions.

16. Method according to claim 12 or 13, **characterized in that** said step D also includes step D2 of designing at least one thicker part in at least one of said areas of said at least one aligner, wherein said thicker part is sized based on at least one of the following parameters:
- shape and size of the roots of said teeth;
- size of the root portion covered by a bone;
- type of shift to which at least one of said teeth must be subjected to reach said final position.

17. Method according to one of claims from 12 to 16, **characterized in that** when said design step included in step D is carried out using specific software, the method includes the following steps:
- importing the models of the initial position, the intermediate positions and the final position in said software in STL or mesh format;
- marking a plurality of check points on said models to indicate the area over which said aligner must extend;
- generating planes based on the position of said check points, for each of said intermediate positions;
- extracting from said mesh a plurality of sections relevant to the remeshing of at least one of said dental arches;
- generating a 3D printable or millable solid.

18. Method according to one of claims from 12 to 17, **characterized in that** it includes a further step of insertion of slide planes which are complementary to each other and are intended to exert forces between said two dental arches so that, while the mouth is closed, they force said patient to move the jaw forward or backward.

19. Method according to one of claims from 12 to 18, **characterized in that** that said step E of physical production is performed by means of a 3D printer.

20. Method according to one of claims from 12 to 19, **characterized in that** it further comprises the step of digitally designing two or more of said aligners (A) joined by means of said connecting appendages (C) to form a set according to claims from 1 to 11, and the subsequent physical production of said set.
